# FASCICULE DE BREVET EUROPEEN

(11) **EP 2 633 648 B1**
(45) Date de publication et mention de la délivrance du brevet: **07.03.2018**
(21) Numéro de dépôt: 11832131.4
(22) Date de dépôt: 27.10.2011
(51) Int. Cl.: H04L 12/26, H04J 14/02, H04Q 11/00, H04L 12/12, H04L 12/28, H04L 12/24

(54) **TRAITEMENT DE DONNÉES POUR LA GESTION DE LA MISE EN VEILLE**
DATENVERARBEITUNG FÜR DIE VERWALTUNG VON DER STAND-BY-SCHALTUNG
PROCESSING OF DATA FOR THE MANAGEMENT OF PLACEMENT ON STANDBY

(30) Priorité: 27.10.2010 FR 1058871
(43) Date de publication de la demande: 04.09.2013
(73) Titulaire: Orange, 75015 Paris (FR)
(72) Inventeur: BOURGART, Fabrice, F-22700 Perros Guirec (FR)
(74) Mandataire: Cabinet Plasseraud
(86) Numéro de dépôt international: PCT/FR2011/052516
(87) Numéro de publication internationale: WO 2012/056181

(56) Documents cités:
- EP-A1- 1 940 051
- WO-A1-2009/054581
- US-A1- 2010 111 523
- US-A1- 2010 118 753

## Description

La présente invention vise un traitement de données pour la gestion de la mise en veille d'un terminal client.

On appelle terminal client un dispositif d'un réseau local, configuré pour être connecté à un réseau d'accès par un ensemble de connexions de type cuivre, optique, et/ou radio. Le terminal client peut être un terminal individuel, dédié à un utilisateur, ou un terminal collectif, partagé entre plusieurs utilisateurs.

On appelle réseau d'accès un réseau assurant le multiplexage et la connectivité entre un réseau local et un ou plusieurs réseaux de service, éventuellement via un ou plusieurs réseaux de collecte. On appelle terminal opérateur un dispositif du réseau d'accès.

Enfin, on appelle politique de mise en veille un ensemble de règles relatives aux conditions dans lesquelles une mise en veille peut être appliquée et/ou au(x) type(s) de veille à appliquer. La politique de mise en veille est fonction du type de terminal client, par exemple individuel ou collectif, d'une configuration prédéfinie du terminal client, et/ou de services configurés pour le terminal client.

Par exemple, les conditions dans lesquelles une mise en veille peut être appliquée ne sont pas les mêmes en présence d'un service à disponibilité limitée et en présence d'un service à haute disponibilité. En effet, un service à disponibilité limitée est un service pour lequel une coupure d'énergie correspond à coupure d'alimentation du terminal client et par suite à une coupure du service. Un service à disponibilité limitée est un service pour lequel une coupure du service impacte peu la qualité d'expérience. Au contraire, un service à haute disponibilité est un service nécessitant un niveau élevé de disponibilité, par exemple un service de type détection d'intrusion, surveillance de santé, lignes de sécurité, etc. Pour un tel service à haute disponibilité, une coupure du service est préjudiciable à la qualité d'expérience.

Les opérateurs de télécommunication déploient des terminaux clients, notamment des modems, pour offrir aux utilisateurs une connectivité de plus en plus large bande permettant le multiplexage de services sur un support unique.

Les technologies de transmission utilisées sont nombreuses, de même que les types de réseaux. Chaque type de technologie de transmission et chaque type de réseau présente des contraintes propres. De plus, les configurations des réseaux de collecte et de service sont choisies par les opérateurs de services et les configurations des réseaux locaux sont choisies par les utilisateurs.

Il appartient à l'opérateur du réseau d'accès, c'est-à-dire à l'opérateur de télécommunication, d'identifier les meilleurs compromis permettant de réaliser une économie d'énergie tout en ménageant les choix des uns et des autres. En particulier, il appartient à l'opérateur de réseau d'accès d'identifier des conditions dans lesquelles une mise en veille peut être appliquée sans être ressentie de manière négative par l'utilisateur final, de manière à réaliser une économie d'énergie sans dégrader la qualité de service. On notera que, bien que les gains en énergie soient plus faibles sur chaque élément lorsqu'on s'approche de la périphérie du réseau, la somme des gains devient prépondérante en raison du grand nombre de terminaisons.

Le document US 2010111523 divulgue différents procédés destinés à faire des économies d'énergie sur un réseau optique de télécommunications. Le système mis en oeuvre par un tel procédé comporte un module de détection du trafic configuré pour détecter les variations du trafic réseau en provenance ou reçu par un terminal optique réseau.

On connaît plusieurs types de veille. Par exemple, les veilles de type délestage de puissance (Power Shedding (PS)) permettent la mise en veille sélective d'interfaces de services de manière à étendre la durée de vie d'une batterie d'un terminal client. Cependant, les veilles de ce type présentent des inconvénients. En particulier elles nécessitent une priorisation entre interfaces, qui peut être implémentée en dur dans le terminal client sans contrôle ou pilotage du terminal opérateur.

Les veilles de type semi-extinction (Dozing) permettent la mise en veille de tout ou partie d'une chaîne de transmission pour le sens client vers réseau lorsque le client n'a pas de données utiles à transmettre. Dans ce cas on coupe aussi le lien de gestion entre le terminal opérateur et le terminal client, et le terminal opérateur ne peut donc pas déterminer, pendant la durée de la veille, si le terminal client est en panne, et/ou si la fibre optique est coupée.

Les veilles de type extinction temporaire (FastSleep ou CyclicSleep) consistent en une extinction temporaire de la circuiterie de l'interface de réseau d'accès du terminal client. Les transmissions optiques descendantes et montantes ne sont plus reçues pendant les temps de veille, mais font l'objet d'un échange protocolaire définissant les caractéristiques de la veille pour ne pas confondre veille et mauvais fonctionnement. Afin de ne pas impacter excessivement sur le fonctionnement, un réveil rapide cyclique est défini pour permettre le réajustement des paramètres entre le terminal opérateur et le terminal client. Le terminal opérateur doit donc maintenir dans son cycle de trame des espaces de temps actifs permettant une reprise rapide des échanges.

Les veilles de type extinction totale (Deepsleep) consistent en une extinction entrainant une perte totale du contact entre le terminal opérateur et le terminal client. Seule une action physique sur le terminal client et/ou une détection d'activité sur une interface de réseau d'accès permet alors la reprise des échanges.

Chacun de ces types de veille est spécifiquement adapté à un système et/ou à une situation, et ne permet donc pas, dans un réseau de télécommunication complexe, d'optimiser l'économie d'énergie réalisée sans dégrader la qualité de service.

La présente invention vient améliorer la situation.

A cet effet, l'invention propose un procédé de traitement de données pour la gestion de la mise en veille d'un terminal client connecté à un terminal opérateur d'un réseau d'accès. En particulier, le procédé comporte les étapes suivantes mises en oeuvre par ledit terminal client :
a) déterminer une politique de mise en veille du terminal client en fonction d'un type du terminal client, d'une configuration prédéfinie du terminal client, et/ou de services configurés pour le terminal client,
b) surveiller une interface client du terminal client, disposée entre le terminal client et une partie d'un réseau local située en aval du terminal client, pour déterminer un état de trafic sur l'interface client, et, en fonction de l'état de trafic et de la politique de mise en veille, commander une mise en veille de l'interface client, puis, lorsque l'interface client est en veille,
c) surveiller une interface de réseau d'accès du terminal client, disposée entre le terminal client et le terminal opérateur, pour déterminer un état de trafic sur l'interface de réseau d'accès, et, en fonction de l'état de trafic et de la politique de mise en veille, émettre à destination du terminal opérateur une requête de mise en veille de l'interface de réseau d'accès.

Ce procédé permet ainsi de mettre en cohérence différentes sources d'information pour décider de manière optimale d'une mise en veille d'un terminal client. En conséquence, ce procédé permet d'optimiser l'économie d'énergie réalisée sans dégrader la qualité de service perçue.

Le terminal client peut être de type terminal individuel ou de type terminal collectif.

L'étape a) peut comporter une opération de détection de la présence d'un service à haute disponibilité parmi les services configurés pour le terminal client.

De préférence, le procédé comporte une étape de test d'une condition d'interruption de la veille. L'étape de test est exécutée lorsque l'interface client et l'interface de réseau d'accès sont en veille. Le procédé comporte également une étape de commande de sortie de veille de l'interface client et de l'interface de réseau d'accès, qui est exécutée lorsque la condition de l'étape de test est vérifiée.

Selon un mode de réalisation de l'invention, le procédé comporte les étapes suivantes mises en oeuvre par le terminal opérateur
d) déterminer une politique de mise en veille du terminal client en fonction d'un type dudit terminal client, d'une configuration prédéfinie dudit terminal client, et/ou de services configurés pour ledit terminal client, et en déduire si le terminal client est éligible pour une mise en veille, et, lorsque le terminal client est éligible pour une mise en veille,
e) déterminer un état de trafic sur ladite interface de réseau d'accès, et, en fonction de l'état de trafic, commander la mise en veille de ladite interface de réseau d'accès.

Le réseau d'accès est par exemple un réseau optique passif, le terminal opérateur étant un terminal de ligne optique, le terminal client étant un terminal de réseau optique.

Le procédé peut comporter, dans le terminal opérateur, une étape de gestion de la mise en veille du terminal opérateur.

Selon un mode de réalisation de l'invention, l'étape de gestion de la mise en veille du terminal opérateur comprend des opérations de détermination d'un nombre de terminaux clients connectés au terminal opérateur, de détermination d'un état de veille de chacun des terminaux utilisateurs, et de commande, lorsque tous les terminaux clients ont été déterminés comme étant en veille, de la mise en veille d'une interface de réseau de service du terminal opérateur, disposée entre le réseau d'accès et un réseau situé en amont du réseau d'accès.

Les étapes du procédé peuvent être réalisées par un programme informatique.

Ainsi, l'invention vise également un programme informatique comportant des instructions pour la mise en oeuvre du procédé précité lorsque ce programme est exécuté par un processeur.

Le programme informatique pour la mise en oeuvre du procédé de traitement de données peut être exécuté dans un dispositif spécifique. Ainsi, l'invention vise également un terminal client apte à être connecté à un terminal opérateur d'un réseau d'accès, comportant un système de gestion de la mise en veille configuré pour, lorsque le terminal client est connecté au terminal opérateur :
- déterminer une politique de mise en veille du terminal client en fonction d'un type dudit terminal client, d'une configuration prédéfinie dudit terminal client, et/ou de services configurés pour ledit terminal client,
- surveiller une interface client dudit terminal client, disposée entre ledit terminal client et une partie d'un réseau local située en aval dudit terminal client, pour déterminer un état de trafic sur ladite interface client, et, en fonction de l'état de trafic et de ladite politique de mise en veille, commander une mise en veille de ladite interface client, puis, lorsque l'interface client est en veille,
- surveiller une interface de réseau d'accès dudit terminal client, disposée entre ledit terminal client et ledit terminal opérateur, pour déterminer un état de trafic sur ladite interface de réseau d'accès, et, en fonction de l'état de trafic et de ladite politique de mise en veille, émettre à destination dudit terminal opérateur une requête de mise en veille de ladite interface de réseau d'accès.

Le terminal client peut comporter un module configuré pour assurer la gestion de l'interface de réseau d'accès, le système de gestion de la mise en veille étant configuré pour agir sur des broches d'alimentation du module.

Selon un autre mode de réalisation de l'invention, le terminal client peut comporter un module configuré pour assurer la gestion de l'interface de réseau d'accès, le système de gestion de la mise en veille étant intégré dans ledit module.

Selon un autre mode de réalisation de l'invention, le terminal client peut comporter un module, configuré pour assurer la gestion de l'interface de réseau d'accès, comportant une broche spécifiquement dédiée à la mise en veille, le système de gestion de la mise en veille étant configuré pour agir sur ladite broche.

Le système de gestion de la mise en veille peut en outre être configuré pour commander séparément une alimentation d'émission MAC et une alimentation de réception MAC.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une vue schématique simplifiée d'un ensemble de réseaux connectés entre eux et formant un réseau de télécommunication complexe ;
- la Figure 2 est une vue schématique montrant plus en détails un réseau local et un réseau d'accès du réseau de télécommunication de la figure 1, selon un mode de réalisation de l'invention ;
- la Figure 3 est une vue similaire à la figure 2 montrant un autre mode de réalisation de l'invention ;
- la Figure 4 est un schéma fonctionnel montrant un terminal client de la figure 3 ;
- la Figure 5 est un schéma fonctionnel montrant un système de gestion de la mise en veille du terminal client de la figure 4 ;
- la Figure 6 est un organigramme illustrant les étapes d'un procédé de gestion de la mise en veille du terminal client de la figure 4, cet organigramme pouvant représenter l'algorithme général du programme informatique au sens de l'invention ;
- la Figure 7 est un organigramme illustrant les étapes d'un procédé de gestion de la mise en veille d'un terminal opérateur connecté au terminal client de la figure 4 ; et
- la Figure 8 est un organigramme illustrant les étapes d'un procédé de choix d'un type de veille à appliquer à un terminal client.

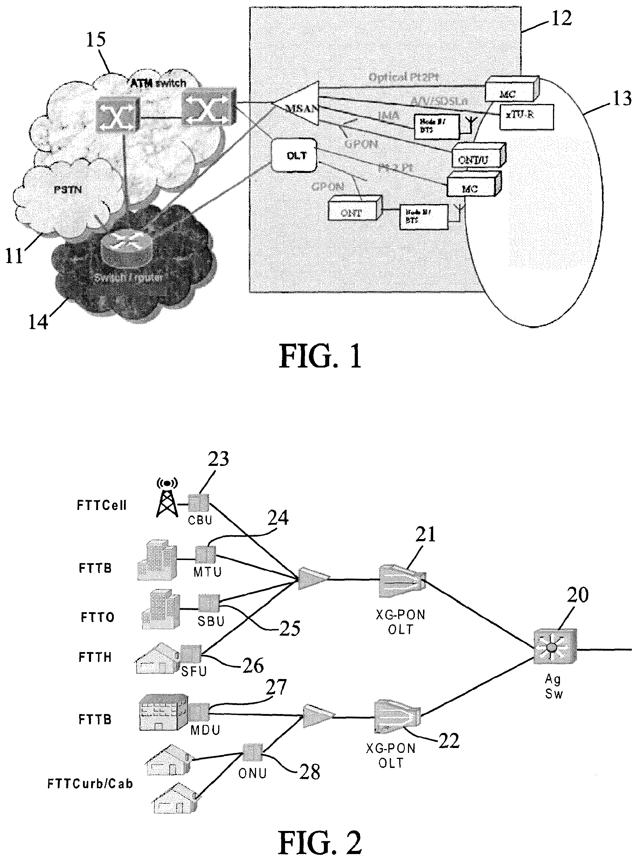

La figure 1 représente un réseau téléphonique commuté (RTC) 11, un réseau d'accès 12, un réseau local 13, un réseau IP 14, et un réseau ATM 15, qui sont connectés entre eux et forment un réseau de télécommunication complexe.

Le réseau téléphonique 11 est également appelé réseau PSTN (Public Switched Telephone Network). Le réseau local 13 peut être individuel ou collectif. Le réseau d'accès 12 est configuré pour assurer le multiplexage et la connectivité entre le réseau local 13 et le réseau de service 14, via le réseau de collecte 15.

La figure 2 représente partiellement l'architecture du réseau d'accès 12 et du réseau local 13, selon un mode de réalisation de l'invention dans lequel le réseau d'accès 12 est de type réseau optique passif (PON). Le réseau d'accès 12 comporte un commutateur d'agrégation 20 connecté à deux terminaux opérateurs 21 et 22, appelés terminaux de ligne optique ou terminaux OLT (Optical Line Terminal).

Le réseau local 13 comporte six terminaux clients 23 à 28, appelés terminaux de réseau optique ou terminaux ONU (Optical Network Unit).

On appelle interface client, ou interface UNI (User Network Interface), une interface entre un terminal ONU et la partie du réseau local située en aval dudit terminal ONU.

On appelle interface de réseau d'accès, ou interface ANI (Access Network Interface), l'interface entre un terminal ONU et le réseau d'accès 2.

Enfin, on appelle interface de réseau de service, ou interface SNI (Service Network Interface), l'interface entre le réseau d'accès et la partie du réseau de télécommunication située en amont du réseau d'accès, dans l'exemple les réseaux 11, 14 et 15 de la figure 1.

Les terminaux OLT 21, 22 sont configurés pour assurer l'interface SNI côté réseau et sont par exemple de type XG-PON.

Les terminaux ONU 23 à 28 sont configurés pour assurer l'interface UNI côté client. Les terminaux ONU 23, 24, 25 et 26 sont connectés au terminal OLT 21. Les terminaux ONU 27 et 28 sont connectés au terminal OLT 22.

Les terminaux ONU 25 et 26 sont des terminaux individuels, appelés terminaux ONT (Optical Network Terminal), c'est-à-dire qu'ils sont chacun dédié à un utilisateur. Les terminaux ONU 25, 26 utilisent par exemple des technologies de communication de type FTTO (Fiber To The Office) ou FTTH (Fiber To The Home). Dans le mode de réalisation représenté sur la figure 2 le terminal ONU 25 est de type SBU (Single Business Unit) et le terminal ONU 26 est de type SFU (Single Family Unit).

Les terminaux ONU 23, 24, 27 et 28 sont des terminaux collectifs, c'est-à-dire qu'ils sont partagés entre différents utilisateurs, et utilisent par exemple des technologies de communication de type FTTB (Fiber To The Building), FTTC (Fiber To The Cell) ou FTTCab (Fiber To The Cab). Dans le mode de réalisation représenté sur la figure 2, le terminal ONU 23 est de type CBU (Cell-site Backhauling Unit), le terminal ONU 24 est de type MTU (Multi Tenant Unit), le terminal ONU 27 est de type MDU (Multi Dwelling Unit).

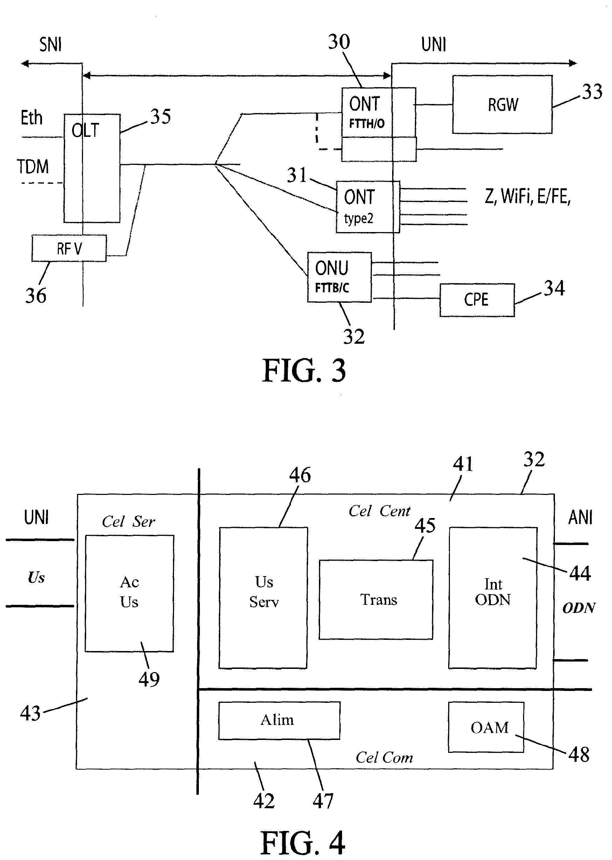

La figure 3 représente un autre mode de réalisation de l'invention dans lequel un terminal OLT 35 est connecté à trois terminaux ONU 30, 31, 32.

Le terminal ONU 30 est un terminal individuel ONT, par exemple un modem GPON (Gigabit Passive Optical Network) connecté à une passerelle domestique (RGW) 33 par une interface Ethernet, DSL (Digital Subscriber Line) ou USB (Universal Serial Bus).

Le terminal ONU 31 est un terminal individuel ONT de type passerelle domestique optique possédant un ensemble d'interfaces dédiées pour chacun des services offert à l'utilisateur du terminal 31. Par exemple, pour une offre de trois services (offre « triple play»), le terminal 31 comporte interface vidéo de type RJ45, une interface pour l'accès au réseau Internet de type RJ45, GbE (Gigabit Ethernet) ou FE (Fast Ethernet), et une interface téléphonique de type paire torsadée cuivre.

Le terminal ONU 32 est une terminaison optique collective et est par exemple disposé au pied d'un immeuble ou à proximité, pour être partagé entre plusieurs équipements clients. Les équipements clients peuvent comprendre un équipement 34 de type CPE (Customer Premises Equipement) raccordé par une interface DSL ou Ethernet.

Un serveur vidéo 36 est connecté au terminal OLT 35 et permet l'émission de données vidéo à destination des terminaux ONU 30, 31 et 32.

La figure 4 représente l'architecture interne d'un terminal ONU, par exemple le terminal ONU 32, selon un mode de réalisation de l'invention. Le terminal 32 comporte une cellule centrale 41, une cellule commune 42 et une cellule de service 43.

La cellule centrale 41 comprend un module de terminaison de ligne 44, également appelé module d'interface ODN (Optical Distribution Network). Le module de terminaison de ligne 44 comporte un bloc de couche MAC (Media Access Control) qui a pour fonction de séquencer l'émission et la réception de données en conformité avec le protocole de transmission utilisé.

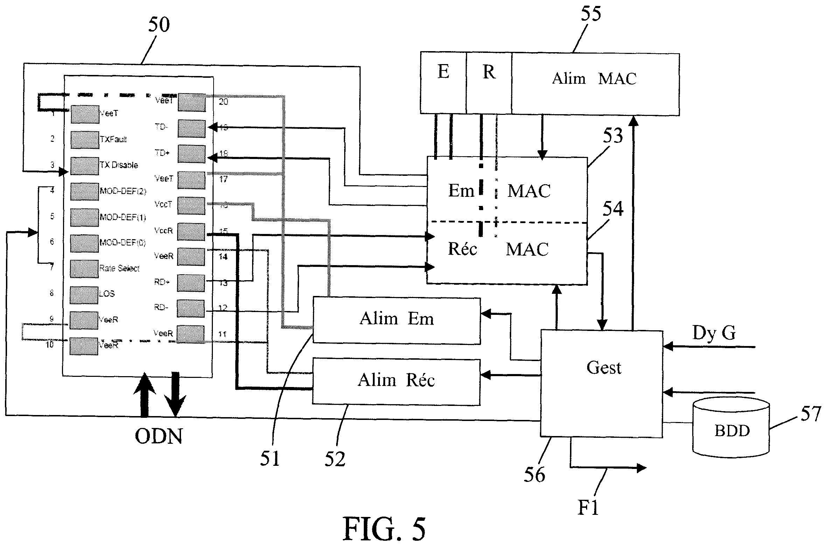

Le module de terminaison de ligne 44 comporte également un bloc d'émission-réception optique 50 (figure 5), appelé module SFP (Small Form-factor Pluggable), comprenant un émetteur, un récepteur, et un circuit logique. L'émetteur comprend par exemple une diode laser et son pilote (« driver »). Le récepteur comprend par exemple une photodiode APD (Avalanche Photodiode) ou PIN (Positive Intrinsic Negative diode) et un circuit d'amplification et de régénération de données associé. Le circuit logique a pour fonction de gérer la transmission numérique et reçoit en temps réel des instructions d'un terminal OLT connecté au terminal ONU 32, par exemple via un en-tête de trame, afin de récupérer la fréquence de trame, qui permet la synchronisation lors de la transmission, et l'horloge, qui permet la récupération des données.

La cellule centrale 41 comporte également un module multiplex de transmission 45 qui a pour fonction d'assurer le formatage des données de l'interface ANI lors de l'insertion et de l'extraction des données. Le module multiplex de transmission 45 réalise également un filtrage des données utiles transmises à travers le canal de communication, ainsi que l'insertion et l'extraction des données servant à la gestion du terminal 32.

La cellule centrale 41 peut en outre comporter un module multiplex d'usagers 46, en particulier lorsque le terminal ONU 33 est un terminal collectif. Le module 46 a pour fonction d'orienter les données provenant du réseau vers l'interface physique de sortie et inversement d'orienter les données client vers la file d'attente correspondant à la QoS requise par le service. Le module 46 a également pour fonction d'allouer le droit de parole entre les usagers qui se partagent la ressource.

La cellule commune 42 est configurée pour s'occuper de toutes les fonctions mutualisables entre les différentes cellules 41, 42, 43, les différents services et les différents équipements client servis par le terminal ONU 32. En particulier, une fonction de la cellule 42 est la fonction d'identification, c'est-à-dire d'authentification du terminal 32 lui-même mais aussi des équipements client qui y sont rattachés, afin de gérer les droits d'accès aux ressources et de bloquer les tentatives de connexions malveillantes intentionnelles ou fortuites. Une autre fonction de la cellule 42 est la synchronisation et la distribution d'horloge aux différents organes constitutifs du terminal ONU 32.

La cellule 42 comporte un bloc de maintenance OAM (Opérations And Maintenance) 48 qui est configuré pour répondre aux sollicitations des opérateurs distants qui veulent suivre les statistiques d'usage et de bon fonctionnement du terminal ONU 32.

La cellule 42 comprend également un bloc de gestion d'alimentation 47 qui est configuré pour alimenter en énergie les différents blocs du terminal ONU 32. Le bloc de gestion d'alimentation peut inclure une batterie de maintien pour maintenir les services en cas de coupure du réseau d'alimentation. Une telle batterie de maintien est en particulier utilisée pour des services à haute disponibilité, dits services « lifeline ».

La cellule de service 43 comporte un bloc d'accès d'usager 49 configuré pour gérer l'aspect interfaces UNI par client (FTTB/C/Cab), et par service (passerelle optique). Il réalise en option le multiplexage sur une même interface de plusieurs services (DSL+POTS) sur paire torsadée si l'intégration des services IP n'est pas réalisée.

Dans le cas où une fonction de gestion séparée est nécessaire, il est possible que la gestion de cette cellule de service 43 soit effectuée à distance par un opérateur de services qui possèdera un serveur ACS (Auto Configuration Server).

La figure 5 représente un système de gestion de la mise en veille du terminal ONU 32, comportant un module d'alimentation émetteur 51, un module d'alimentation récepteur 52, un module de commande d'alimentation d'émission MAC 53, un module de commande d'alimentation de réception MAC 54, un module d'alimentation MAC 55, et un module de gestion d'économie d'énergie 56.

Le système de gestion de la mise en veille est configuré pour appliquer sélectivement plusieurs types de veille. Par exemple une veille de type délestage de puissance (Power Shedding (PS)) permettant la mise en veille sélective d'interfaces de réseau, une veille de type semi-extinction (Dozing) permettant la mise en veille de tout ou partie d'une chaîne de transmission pour le sens client vers réseau lorsque le client n'a pas de données utiles à transmettre, une veille de type extinction temporaire (Fast Sleep ou Cyclic Sleep) consistant en une extinction temporaire de la circuiterie de l'interface de réseau d'accès du terminal client, et/ou une veille de type extinction totale (Deep sleep) consistant en une extinction entrainant une perte totale du contact entre le terminal opérateur et le terminal client.

Le module d'alimentation émetteur 51 est connecté à des broches d'alimentation d'émission du module 50. Le module d'alimentation récepteur 52 est connecté à des broches d'alimentation de réception du module 50. Les modules 51 et 52 peuvent être disposés dans le terminal ONU 32 entre le module fonction d'alimentation en énergie 47 et le module d'interface d'ODN 44. La séparation de l'alimentation de la logique de réception et de l'alimentation de la logique d'émission permet d'augmenter l'impact d'une mise en veille de type Dozing, ce qui permet d'optimiser la consommation globale du terminal ONU.

Les modules de commande d'alimentation d'émission MAC 53 et de commande d'alimentation de réception MAC 54 sont connectés respectivement à des broches d'alimentation d'émission et de réception du module 50. Les modules 53 et 54 sont également connectés au module d'alimentation MAC 55. Le module 53 est configuré pour commander l'activation d'une commande de coupure (commande « Tx disable ») du module 50 dans le cas où le module 50 implémente une fonction d'économie d'énergie sur la base de cette commande. Les commandes d'émission MAC et de réception MAC sont ainsi séparées. Le module 55 exécute les instructions provenant des modules 53 et 54. Les modules 53, 54 et 55 peuvent être implémentés dans le module multiplex de transmission 45.

Le module de gestion d'économie d'énergie 56 est configuré pour commander les autres modules du système de gestion de la mise en veille afin de gérer les mises en veille des interfaces ANI et UNI du terminal ONU 32, selon un ou plusieurs des types de veille cités ci-dessus. On notera que pour le cas de veilles de type Cyclic Sleep et Deep Sleep la gestion inclut un maintien de l'énergie du module de gestion d'économie d'énergie 56 et une horloge interne suffisamment stable pour déterminer la fin de la veille avec une précision suffisante pour rester synchronisé avec le terminal OLT et en particulier pour ne pas tomber en dehors des fenêtres temporelles communes permettant la resynchronisation de la transmission.

Le module de gestion d'économie d'énergie 56 est configuré pour recevoir un signal déclenchant une mise en veille et une reprise d'activité, le signal spécifiant le type de veille. Une commande de mise en veille peut par exemple être activée sur reconnaissance d'une information PLOAM (Physical Layer Opérations, Administration and Maintenance) ou OMCI (Optical network termination management and control interface).

Le module de gestion d'économie d'énergie 56 peut également déclencher une mise en veille en fonction d'une configuration locale mémorisée dans une base de données 57.

Lorsqu'une mise en veille est déclenchée, le module de gestion d'économie d'énergie 56 émet une commande de mise en veille des interfaces UNI, comme symbolisé par la flèche F1.

Dans le cadre d'une transmission multi-vitesse de modulation capable d'adapter le débit en ligne, pour obtenir un gain de puissance consommée, le module de gestion d'économie d'énergie 56 est également configuré pour élaborer une commande de choix de la vitesse. Dans ce cas, une commande de sélection de combinaison des vitesses de modulation (US & DS) est émise par le module de gestion d'économie d'énergie 56 à destination du module 50, la commande étant coordonnée avec une commande similaire synchrone à destination des modules 53 et 54.

Le fonctionnement en mode de vitesse réduite bénéficie alors du couplage à un mode d'allocation de bande passante dynamique (DBA) qui est fonction du besoin client, c'est-à-dire qui dépend d'une observation du débit réel consommé par le client. Ainsi, si un utilisateur regarde un canal vidéo, on observe un signal large bande descendant et un signal montant comportant seulement des réponses IGMP (Internet Group Management Protocol). Il est alors inutile de maintenir une capacité large bande dans le sens montant. Un nombre réduit d'intervalles temporels (time slots) peut alors être alloué pour le sens montant, ce qui se traduit par un temps d'émission bref par trame pour le sens montant. De plus, pendant le temps de parole du terminal ONU 32, le trafic peut être transmis avec une vitesse de modulation basse économisant ainsi sur la consommation qui est souvent proportionnelle à la vitesse d'horloge.

Plusieurs modes de réalisation sont possibles pour l'implémentation du système de gestion de la mise en veille.

Selon un premier mode de réalisation, représenté sur la figure 5, la gestion est complètement externe au module 50 et est réalisée par une logique externe agissant sur les broches d'alimentation du module 50. Ainsi une mise en veille de type Dozing coupera l'alimentation des broches du transmetteur, et une mise en veille de type Cyclic Sleep coupera l'ensemble des alimentations.

Selon un deuxième mode de réalisation, la gestion de la mise en veille est réalisée en interne à partir d'une interface RSSI (Received Signal Strength Indication) du module 50, par la définition d'un message ou d'une commande spécifique. Dans ce mode de réalisation, le module de gestion d'économie d'énergie 56, permettant la coupure d'alimentation de l'émetteur ou de l'ensemble émetteur-récepteur, est disposé dans le module 50. La logique de reconnaissance RSSI doit alors rester sous tension pour permettre une sortie du mode veille.

Selon un troisième mode de réalisation la gestion est réalisée en interne à partir d'un signal de commande, appelé signal « enable ». Il est alors possible, pour commander une mise en veille de type Dozing d'utiliser la broche d'inhibition de l'émetteur du module 50. La conception du module 50 et la logique externe sont alors adaptées afin qu'une action sur cette broche soit reconnue.

Selon un quatrième mode de réalisation, le module 50 comporte une broche supplémentaire dédiée à la mise en veille. Ce mode de réalisation permet d'optimiser l'implémentation et les temps de mise en veille et de réveil.

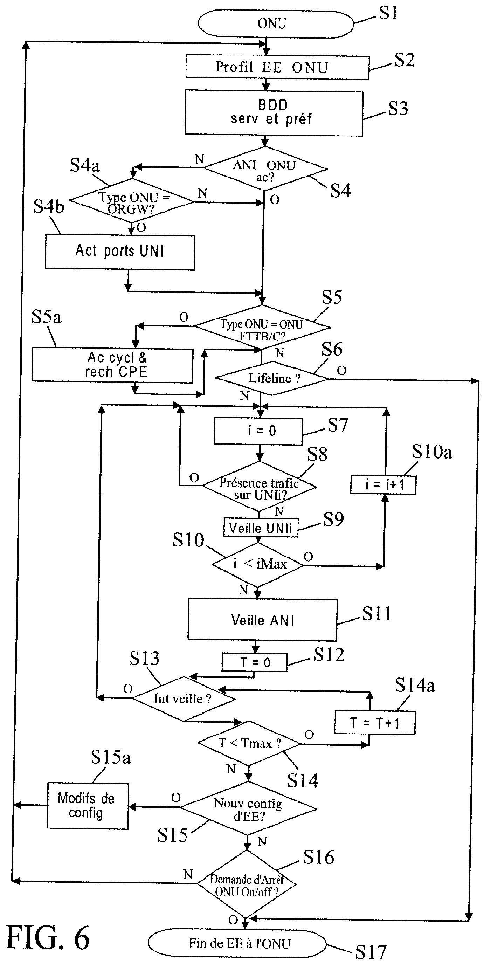

En se référant à la figure 6, on décrit un procédé de gestion de la mise en veille du terminal ONU 32.

Les étapes S1 à S3 sont des étapes d'initialisation du terminal ONU 32.

A l'étape S1, le terminal ONU 32 est mis sous tension.

A l'étape S2, des informations relatives à une configuration du profil d'économie d'énergie mémorisé pour le terminal ONU 32 sont chargées par le module de gestion 56 à partir de la base de données 57.

A l'étape S3, le module de gestion 56 charge des données relatives aux services configurés pour le terminal ONU 32, ainsi que des données relatives à des préférences client.

Les étapes S4 à S6 sont des étapes d'adaptation de la politique de gestion d'économie d'énergie des interfaces UNI en fonction du type de terminal ONU et des données de configuration provenant du client ou d'un opérateur tiers.

A l'étape S4, le module de gestion d'économie d'énergie 56 teste une condition d'activation de l'interface ANI du terminal ONU 32. Si la condition est vérifiée, le procédé passe à l'étape S5, sinon le procédé passe à l'étape S4a.

A l'étape S4a, le module de gestion d'économie d'énergie 56 teste une condition de type de terminal ONU correspondant à un terminal individuel (ORGW). Si la condition est vérifiée, le procédé passe à l'étape S4b, sinon le procédé passe à l'étape S5.

A l'étape S4b, le module de gestion d'économie d'énergie 56 active dans le terminal ONU 32 les ports UNI en fonction des données récupérées à l'étape S3, c'est-à-dire les ports UNI validés dans le profil par le client. Puis le procédé passe à l'étape S5.

A l'étape S5, le module de gestion d'économie d'énergie 56 teste une condition de type de terminal ONU correspondant à un terminal collectif (FTTB/C). Si la condition est vérifiée, le procédé passe à l'étape S5a, sinon le procédé passe à l'étape S6.

A l'étape S5a, le module de gestion d'économie d'énergie 56 réalise une activation cyclique et recherche la présence d'équipements utilisateurs (CPE) sur les ports du terminal ONU 32. Puis le procédé passe à l'étape S6.

A l'étape S6, le module de gestion d'économie d'énergie 56 teste une condition de présence d'un service à haute disponibilité (lifeline). Si la condition est vérifiée, le procédé passe à l'étape S17, sinon le procédé passe à l'étape S7.

Les étapes S7 à S10 sont des étapes de surveillance des états de l'interface UNI et du trafic.

A l'étape S7, une variable i est fixé à zéro.

A l'étape S8, le module de gestion d'économie d'énergie 56 teste une condition de présence de trafic sur l'interface UNI. Si la condition est vérifiée, le procédé retourne à l'étape S7, sinon le procédé passe à l'étape S9.

A l'étape S9, le module de gestion d'économie d'énergie 56 commande une mise en veille de l'interface UNI.

A l'étape S10, le module de gestion d'économie d'énergie 56 teste si la valeur de la variable i est inférieure à une valeur prédéterminée iₘₐₓ. Si la condition est vérifiée, le procédé passe à l'étape S10a, sinon le procédé passe à l'étape S11.

A l'étape S10a, la variable i est incrémentée : i=i+1. Puis le procédé retourne à l'étape S7.

Les étapes S11 à S15 sont des étapes de mise en veille du terminal ONU 32 sur un temps de cycle qui dépend du type de terminal ONU, du type de veille utilisée et de ses modes d'interruption.

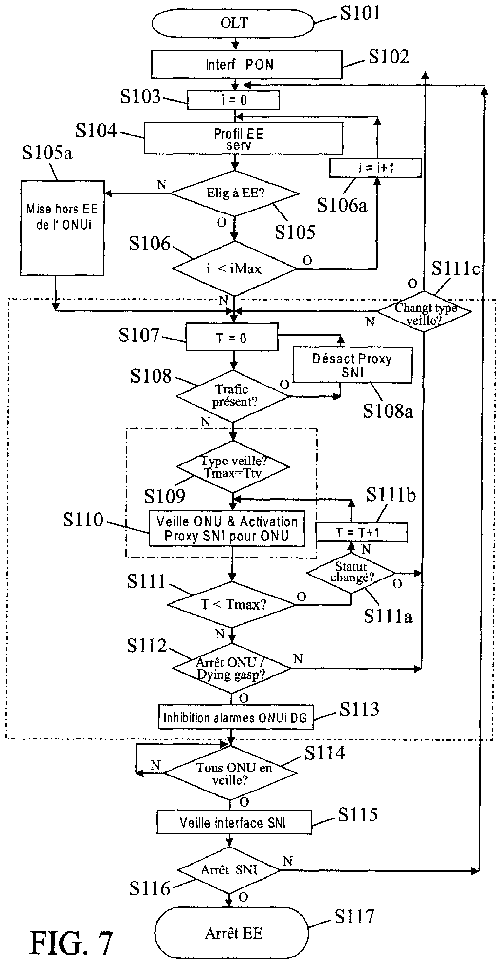

A l'étape S11, le terminal OLT 35 connecté au terminal ONU 32 commande, en réponse à une requête du module de gestion d'économie d'énergie 56, une mise en veille l'interface ANI du terminal ONU 32. Le temps de veille Tveille est fixé à une valeur prédéterminée Tmax. La génération de la commande par le terminal OLT est décrite en détails en référence à la figure 7.

A l'étape S12, une variable T est fixée à zéro.

A l'étape S13, le module de gestion d'économie d'énergie 56 teste une condition d'interruption de la veille. Si la condition est vérifiée, le procédé retourne à l'étape S7, sinon le procédé passe à l'étape S14.

A l'étape S14, le module de gestion d'économie d'énergie 56 teste une condition de valeur de la variable T inférieure à la valeur prédéterminée Tmax. Si la condition est vérifiée, le procédé passe à l'étape S14a, sinon le procédé passe à l'étape S15.

A l'étape S14a, la variable T est incrémentée : T=T+1. Puis le procédé retourne à l'étape S13.

A l'étape S15, le module de gestion d'économie d'énergie 56 teste une condition de nouvelle configuration d'économie d'énergie. Si la condition est vérifiée, le procédé passe à l'étape S15a, sinon le procédé passe à l'étape S16.

A l'étape S15a, le module de gestion d'économie d'énergie 56 mémorise les modifications de configuration d'économie d'énergie. Puis le procédé retourne à l'étape S2.

Les étapes S16 et S17 sont des étapes d'arrêt volontaire local du terminal ONU 32 ou de sortie du mode économie d'énergie.

A l'étape S16, le module de gestion 56 teste une condition de demande d'arrêt du terminal ONU 32. Si la condition est vérifiée, le procédé passe à l'étape S17, sinon le procédé retourne à l'étape S2.

A l'étape S17, le module de gestion d'économie d'énergie 56 commande la fin de la veille du terminal ONU 32.

Ce procédé permet ainsi de mettre en cohérence les différentes sources d'information à surveiller pour décider de manière optimale d'une mise en veille d'un terminal ONU, notamment l'état de configuration logique général, l'état de configuration des interfaces UNI, l'état de trafic sur les interfaces UNI, l'état de l'alimentation du terminal ONU, et les actions sur un bouton on/off du terminal ONU.

En effet, si l'opérateur gestionnaire du terminal ONU n'a pas provisionné les ressources logiques nécessaires à l'établissement de trafic, il n'y a pas besoin d'alimenter l'interface ou les interfaces UNI présentes.

Si des services locaux sont possibles, alors l'alimentation des interfaces UNI doit être réalisée selon les desiderata du client ou selon un mode par défaut proposé par l'opérateur permettant au client de saisir ses préférences, via une interface activée par défaut, en fonction de ses besoins locaux (LAN, Home network).

Si le terminal ONU 32 comporte une mise en service automatique de CPE, l'application de la politique de mise en service de l'opérateur gestionnaire peut être appliquée soit selon une configuration d'un technicien depuis le terminal OLT, soit en aveugle avec une alimentation périodique de l'interface UNI et des tentatives d'activation et de recherche de présence de CPE.

Si une procédure de test d'interface UNI doit être réalisée avant la mise en service, une alimentation temporaire forcée peut être autorisée pour la durée du test.

Le procédé permet de gérer l'activation de la mise en mode consommation réduite, ou veille, par port, ainsi que de gérer la détection d'absence de trafic, et de gérer le fonctionnement par module, c'est-à-dire par groupement de ports physiques.

L'état de l'alimentation du terminal ONU 32 peut être pris en considération pour commander un fonctionnement nominal lorsque le terminal ONU 32 est raccordé au secteur, et pour commander un mode d'économie d'énergie lorsque le terminal ONU 32 fonctionne sur batterie.

Dans un environnement multi-opérateurs, une base de données des caractéristiques de service de chaque opérateur fournisseur de services peut être préalablement établie. Cette base de données peut notamment contenir des informations relatives à la présence de services non éligibles à une mise en veille, au type de mise en veille acceptable pour chaque service, à un ordre de priorité entre interfaces et services, à la présence de flux de gestion/supervision (OAM) d'une transmission de bout en bout ou de segment indépendamment du fonctionnement du service, et/ou au besoin de réseau de proxy de maintien d'identification/authentification. Par exemple, la compatibilité de la mise en veille avec un service de magnétoscope programmé à l'avance peut nécessiter un maintien de connectivité ou une reprise anticipée automatique du fonctionnement.

Ce procédé peut en outre permettre de mettre en place un système de facturation au fournisseur de services en fonction de l'énergie consommée par le terminal ONU 32 et/ou de facturation au client en cas de surconsommation due à une configuration minimaliste.

En se référant à la figure 7, on décrit ci-dessous un procédé de gestion de la mise en veille du terminal OLT 35 connecté aux terminaux ONU 30, 31 et 32.

Les étapes S101 à S106 sont des étapes d'initialisation et/ou de mise à jour des données relatives à des configurations de profil d'économie d'énergie et à des services associés aux terminaux ONU 30, 31, 32.

A l'étape S101, le terminal OLT 35 est mis sous tension.

A l'étape S102, une interface PON du terminal OLT 35 est activée.

A l'étape S103, une variable i est fixée à zéro. La variable i est associée aux terminaux ONU connectés au terminal OLT. Ici, trois terminaux ONU 30, 31, 32 sont connectés au terminal OLT 35. La variable i peut donc prendre les valeurs i=0, i=1 et i=2, chaque valeur étant associée à un terminal ONU. Par exemple, le terminal ONU 30 est associé à la valeur '0' et est appelé terminal ONU₀, le terminal ONU 31 est associé à la valeur '1' et est appelé terminal ONU₁, et le terminal ONU 32 est associé à la valeur '2' et est appelé terminal ONU₂.

A l'étape S104, le terminal OLT 35 charge les données relatives à une configuration des profils d'économie d'énergie et à des services associés au terminal ONU₀.

A l'étape S105, le terminal OLT 35 teste une condition d'éligibilité du terminal ONU₀ à la mise en veille. Si la condition est vérifiée, le procédé passe à l'étape S106, sinon le procédé passe à l'étape S105a.

A l'étape S105a, le terminal ONU₀ est déterminé comme ne pouvant pas être mis en veille. Puis le procédé passe à l'étape S107.

A l'étape S106, le terminal OLT 35 teste une condition de valeur de la variable i inférieure à une valeur prédéterminée iₘₐₓ. La valeur iₘₐₓ est fonction du nombre de terminaux ONU connectés au terminal OLT 35. Ici iₘₐₓ=2. Si la condition est vérifiée, le procédé passe à l'étape S106a, sinon le procédé passe à l'étape S107.

A l'étape S106a, la variable i est incrémentée : i=i+1. Puis le procédé retourne à l'étape S104.

Les étapes S107 à S113 constituent une boucle de mise en veille, qui est appliquée à chaque terminal ONU apte à être mis en veille.

A l'étape S107, une variable T est fixée à 0.

A l'étape S108, le terminal OLT 35 teste une condition de présence de trafic lié au terminal ONU sélectionné pour le passage courant dans la boucle, par exemple le terminal 30. La recherche de présence de trafic peut être effectuée à l'aide de statistiques provenant de l'interface UNI ou par une surveillance DBA. Si la condition est vérifiée, le procédé passe à l'étape S108a, sinon le procédé passe à l'étape S109.

A l'étape S108a, le terminal OLT 35 désactive le proxy SNI pour le terminal sélectionné 30. Puis le procédé retourne à l'étape S107.

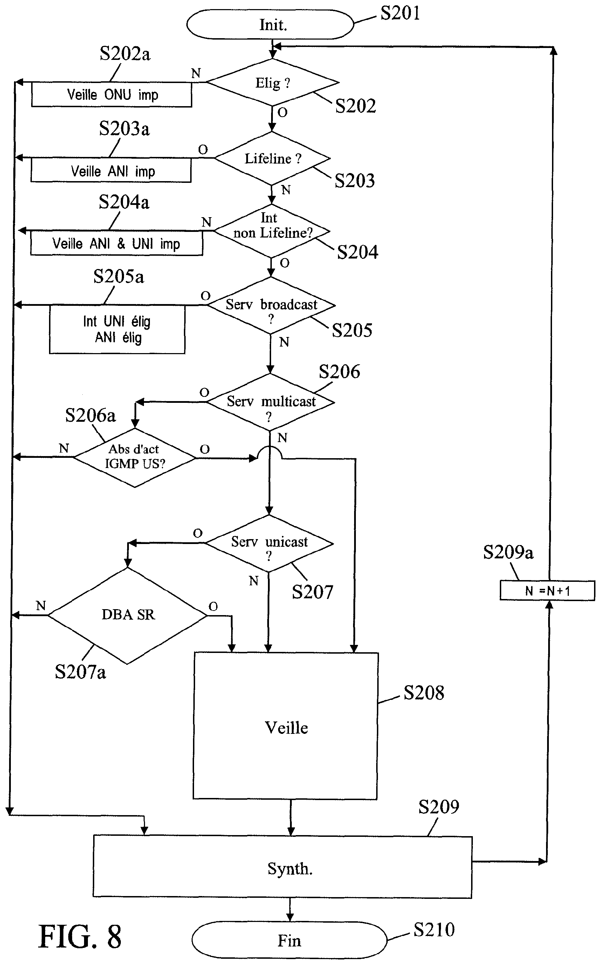

A l'étape S109, le terminal OLT 35 détermine un type de veille. Puis un temps de veille Tveille est fixé à une valeur prédéterminée Tmax. Le paramètre de durée de veille Tveille dépend du type de veille. Le choix du type de veille est décrit en détails en référence à la figure 8.

A l'étape S110, le terminal OLT 35 commande la mise en veille du terminal ONU sélectionné 30 et active proxy SNI pour le terminal ONU sélectionné 30.

A l'étape S111, le terminal OLT 35 teste une condition de valeur de la variable T inférieure à la durée prédéterminée Tmax. Si la condition est vérifiée, le procédé passe à l'étape S111a, sinon le procédé passe à l'étape S112.

A l'étape S111a, le terminal OLT 35 teste une condition de changement de statut. Ce test a pour but la prise en compte de conditions de sortie de veille prévue dans chacun des types de veille normalisés. Si la condition est vérifiée le procédé passe à l'étape S111c, sinon le procédé passe à l'étape S111b.

A l'étape S111b, la variable T est incrémentée : T=T+1. Puis le procédé retourne à l'étape S110.

A l'étape S111c, le terminal OLT 35 teste une condition de changement de type de veille. Si la condition est vérifiée, le procédé retourne à l'étape S103, sinon le procédé retourne à l'étape S107.

A l'étape S112, le terminal OLT 35 teste une condition d'arrêt du terminal ONU sélectionné 30. Si la condition est vérifiée le procédé passe à l'étape S113, sinon le procédé retourne à l'étape S111c.

A l'étape S113, le terminal OLT 35 commande l'inhibition des alarmes pour le terminal ONU sélectionné 30.

La boucle est répétée de manière similaire pour chaque terminal client connecté au terminal OLT 35, donc dans l'exemple pour les terminaux ONU 31 et 32.

Les étapes S114 à S117 sont des étapes de synthèse de mise en veille pour l'ensemble de l'interface SNI, c'est-à-dire pour l'ensemble des terminaux ONU 30, 31, 32.

A l'étape S114, le terminal OLT 35 teste une condition de veille de tous les terminaux ONU 30, 31, 32. Si la condition est vérifiée, le procédé passe à l'étape S115. Sinon le procédé retourne à l'étape S114, la boucle étant réalisée selon une temporisation de scrutation.

A l'étape S115, le terminal OLT 35 commande la mise en veille de son interface PON.

A l'étape S116, le terminal OLT 35 teste une condition d'arrêt de l'interface PON. Si la condition est vérifiée, le procédé passe à l'étape S117, sinon le procédé retourne à l'étape S103.

A l'étape S117, le terminal OLT 35 arrête la veille de son interface SNI et du proxy pour tous les terminaux ONU connectés au terminal OLT 35.

Ce procédé permet ainsi à des opérateurs réseau et service de se prémunir de flots de messages d'alarmes consécutifs à une mise en veille, d'assurer la stabilité du réseau, et d'économiser de l'énergie en commandant des mises en veille tout en assurant des temps de rétablissements aussi faibles que possible pour conserver une bonne qualité de service.

Le terminal OLT, en tant que premier organe réseau, est bien adapté pour gérer la détection et la mise en oeuvre des systèmes de mise en veille des terminaux ONU. Le terminal OLT, à partir de l'information d'état reçu de chaque terminal ONU, va pouvoir réaliser une hiérarchisation des alarmes de manière à ne transmettre vers les différents éléments du réseau que celle de plus haut niveau ou une synthèse d'alarme. Cela permet la propagation d'information sans pour autant inonder le réseau avec une information redondante. On peut alors parler alors de rôle de proxy du terminal OLT.

Le terminal OLT peut aussi activer une routine de réponse aux messages de sollicitation des terminaux ONU déclarés en veille. Dans ce cas, le terminal OLT répondra aux messages OAM Ethernet afin de maintenir les statistiques de disponibilité de réseau, aux commandes IGMP pour maintenir les flux broadcast et multicast dans le bouquet sur au moins le temps de cycle (dozing), et aux demandes de confirmation d'authentification réseau s'il n'y a pas eu de rupture dans la connectivité (adresse IP, DNS, etc.).

En se référant à la figure 8 on décrit un procédé de choix d'un type de veille à appliquer à un terminal ONU.

A l'étape S201, le procédé est initialisé.

A l'étape S202, le terminal OLT 35 teste une condition d'éligibilité du terminal ONU à une mise en veille. Ce test est par exemple réalisé en recherchant dans des contrats opérateurs-client si une mise en veille est possible et dans quelles conditions. La base de données des caractéristiques de service décrite ci-dessus peut être utilisée. Lorsque la condition est vérifiée le procédé passe à l'étape S203, sinon le procédé passe à l'étape S202a.

A l'étape S202a, le terminal OLT 35 détermine que la mise en veille du terminal ONU est impossible. Puis le procédé passe à l'étape S209.

A l'étape S203, le terminal OLT 35 teste une condition de présence d'un service à haute disponibilité. Lorsque la condition est vérifiée le procédé passe à l'étape S203a, sinon le procédé passe à l'étape S204.

A l'étape S203a, le terminal OLT 35 détermine qu'une mise en veille de l'interface ANI du terminal ONU est impossible. Puis le procédé passe à l'étape S209.

A l'étape S204, le terminal OLT 35 teste une condition de présence d'une interface qui n'est pas à haute disponibilité. Lorsque la condition est vérifiée le procédé passe à l'étape S205, sinon le procédé passe à l'étape S204a.

A l'étape S204a, le terminal OLT 35 détermine que la mise en veille des interfaces ANI et ONU est impossible. Puis le procédé passe à l'étape S209.

A l'étape S205, le terminal OLT 35 teste la présence de services broadcast. Lorsque la condition est vérifiée le procédé passe à l'étape S206, sinon le procédé passe à l'étape S205a.

A l'étape S205a, le terminal OLT 35 détermine que l'interface UNI du terminal ONU est éligible à une mise en veille de type Power Shedding, et que l'interface ANI est éligible à une mise en veille de type Dozing. Puis le procédé passe à l'étape S209.

A l'étape S206, le terminal OLT 35 teste une condition de présence de services multicast. Lorsque la condition est vérifiée le procédé passe à l'étape S207, sinon le procédé passe à l'étape S206a.

A l'étape S206a, le terminal OLT 35 teste une condition d'absence d'activité IGMP (Internet Group Management Protocol). Lorsque la condition est vérifiée le procédé passe à l'étape S207, sinon terminal OLT 35 détermine qu'une mise en veille des interfaces ANI et UNI est contradictoire avec un service en cours et le procédé passe à l'étape S209.

A l'étape S207, le terminal OLT 35 teste une condition de présence de services unicast. Lorsque la condition est vérifiée le procédé passe à l'étape S208, sinon le procédé passe à l'étape S207a.

A l'étape S207a, le terminal OLT 35 teste une condition d'allocation de bande passante (DBA) vide ou d'ensemble des slots attribués vides. Lorsque la condition est vérifiée le procédé passe à l'étape S208, sinon le terminal OLT 35 détermine qu'une mise en veille des interfaces ANI et UNI est contradictoire avec un service en cours et le procédé passe à l'étape S209.

A l'étape S208, le terminal OLT 35 détermine qu'il n'y a pas de service à distance provisionnés qui soit actif. Une veille de type Cyclic ou Deep Sleep peut être appliquée à l'interface ANI.

A l'étape S209, le terminal OLT 35 réalise une synthèse de l'économie d'énergie possible pour le terminal ONU. Le procédé passe alors aux étapes S209a et S210.

A l'étape S209a, une variable N est incrémentée : N=N+1 et le procédé retourne à l'étape S202. La variable N représente les terminaux ONU connectés au terminal OLT 35. La boucle est recommencée pour chaque terminal ONU.

A l'étape S210, le procédé est terminé.

Les procédés décrits ci-dessus permettent d'optimiser l'économie d'énergie tout en conservant la qualité de service.

On notera que, lorsqu'un terminal ONU est partagé entre plusieurs clients ou n'est qu'un relais assurant la collecte d'antennes de réseaux radio/hertzien/mobile, l'économie d'énergie ne dépend pas d'un client mais d'un ensemble de clients. Une politique de mise en veille doit alors prendre en compte un ensemble de paramètres, notamment une détection d'absence de trafic et d'opérations pour l'ensemble du système, une gestion des interfaces UNI permettant l'alimentation individuelle, et une répercussion d'une indication en chaîne de la mise en veille des équipements en aval sur une interface.

En effet, il est intéressant d'alerter les équipements gérant chacune des couches et applications, notamment pour la suppression/occultation des alarmes générées par un état de veille qui correspond à un fonctionnement normal. Il est également intéressant de réaliser une information « de courtoisie » vers les plates-formes de gestion à distance afin qu'elles ne tentent pas d'opération de maintenance vouées à l'échec, temps réel ou pas, par exemple un téléchargement de mises à jour logicielles.

Un agent peut en outre être mis en oeuvre pour prendre en charge des automatismes permettant une restauration rapide lors de la sortie de l'état de veille pour ré-établir la communication et minimiser la gêne occasionnée.

Bien entendu, la présente invention ne se limite pas aux formes de réalisation décrites ci-avant à titre d'exemples ; elle s'étend à d'autres variantes.

Par exemple, les connexions entre le terminal OLT et les terminaux ONU ne sont pas nécessairement de type optique mais peuvent également être de type cuivre et/ou radio.

## Revendications

1. Procédé de traitement de données pour la gestion de la mise en veille d'un terminal client (23, 24, 25, 26, 27, 28, 30, 31, 32) connecté à un terminal opérateur (21, 22, 35) d'un réseau d'accès, le procédé comportant les étapes suivantes mises en oeuvre par ledit terminal client :
a) déterminer (S4, S4a, S4b, S5, S5a, S6) une politique de mise en veille du terminal client en fonction d'un type dudit terminal client, d'une configuration prédéfinie dudit terminal client, et/ou de services configurés pour ledit terminal client,
b) surveiller (S7, S8, S9, S10, S10a) une interface client dudit terminal client, disposée entre ledit terminal client et une partie d'un réseau local située en aval dudit terminal client, pour déterminer un état de trafic sur ladite interface client, et, en fonction de l'état de trafic et de ladite politique de mise en veille, commander une mise en veille de ladite interface client, puis, lorsque l'interface client est en veille,
c) surveiller (S11, S12, S13, S14, S14a) une interface de réseau d'accès dudit terminal client, disposée entre ledit terminal client et ledit terminal opérateur, pour déterminer un état de trafic sur ladite interface de réseau d'accès, et, en fonction de l'état de trafic et de ladite politique de mise en veille, émettre à destination dudit terminal opérateur une requête de mise en veille de ladite interface de réseau d'accès.

2. Procédé selon la revendication 1, **caractérisé en ce que** ledit terminal client (23, 24, 25, 26, 27, 28, 30, 31, 32) est de type terminal individuel ou de type terminal collectif.

3. Procédé selon la revendication 1, **caractérisé en ce que** l'étape a) comporte une opération (S6) de détection de la présence d'un service à haute disponibilité parmi les services configurés pour ledit terminal client.

4. Procédé selon la revendication 1, **caractérisé en ce qu'**il comporte une étape (S13) de test d'une condition d'interruption de la veille, qui est exécutée lorsque l'interface client et l'interface de réseau d'accès sont en veille, et une étape de commande de sortie de veille de l'interface client et de l'interface de réseau d'accès, qui est exécutée lorsque la condition de l'étape de test est vérifiée.

5. Procédé selon la revendication 1, **caractérisé en ce qu'**il comporte les étapes suivantes mises en oeuvre par le terminal opérateur (21, 22, 35) :
d) déterminer (S103, S104, S105, S105a, S106, S106a) une politique de mise en veille du terminal client (23, 24, 25, 26, 27, 28, 30, 31, 32) en fonction d'un type dudit terminal client, d'une configuration prédéfinie dudit terminal client, et/ou de services configurés pour ledit terminal client, et en déduire si le terminal client est éligible pour une mise en veille, et, lorsque le terminal client est éligible pour une mise en veille,
e) déterminer (S108) un état de trafic sur ladite interface de réseau d'accès, et, en fonction de l'état de trafic, commander la mise en veille de ladite interface de réseau d'accès.

6. Procédé selon la revendication 1, caractérisé en ce le réseau d'accès est un réseau optique passif, le terminal opérateur étant un terminal de ligne optique, le terminal client étant un terminal de réseau optique.

7. Procédé selon la revendication 1, **caractérisé en ce qu'**il comporte, dans ledit terminal opérateur, une étape (S115) de gestion de la mise en veille dudit terminal opérateur.

8. Procédé selon la revendication 7, caractérisé que l'étape de gestion de la mise en veille dudit terminal opérateur (21, 22, 35) comprend des opérations de détermination d'un nombre de terminaux clients (23, 24, 25, 26, 27, 28, 30, 31, 32) connectés audit terminal opérateur, de détermination (S114) d'un état de veille de chacun desdits terminaux utilisateurs, et de commande (S115), lorsque tous les terminaux clients ont été déterminés comme étant en veille, de la mise en veille d'une interface de réseau de service dudit terminal opérateur, disposée entre le réseau d'accès et un réseau situé en amont du réseau d'accès.

9. Programme informatique comportant des instructions pour la mise en oeuvre du procédé selon l'une quelconque des revendications 1 à 8 lorsque ce programme est exécuté par un processeur.

10. Terminal client (23, 24, 25, 26, 27, 28, 30, 31, 32) apte à être connecté à un terminal opérateur (21, 22, 35) d'un réseau d'accès, comportant un système de gestion (51, 52, 53, 54, 55, 56, 57) de la mise en veille configuré pour:
o déterminer une politique de mise en veille du terminal client en fonction d'un type dudit terminal client, d'une configuration prédéfinie dudit terminal client, et/ou de services configurés pour ledit terminal client,
o surveiller une interface client dudit terminal client, disposée entre ledit terminal client et une partie d'un réseau local située en aval dudit terminal client, pour déterminer un état de trafic sur ladite interface client, et, en fonction de l'état de trafic et de ladite politique de mise en veille, commander une mise en veille de ladite interface client, puis, lorsque l'interface client est en veille,
o surveiller une interface de réseau d'accès dudit terminal client, disposée entre ledit terminal client et ledit terminal opérateur, pour déterminer un état de trafic sur ladite interface de réseau d'accès, et, en fonction de l'état de trafic et de ladite politique de mise en veille, émettre à destination dudit terminal opérateur une requête de mise en veille de ladite interface de réseau d'accès.

11. Terminal client selon la revendication 10, **caractérisé en ce qu'**il comporte un module (50) configuré pour assurer la gestion de l'interface de réseau d'accès, le système de gestion de la mise en veille étant configuré pour agir sur des broches d'alimentation du module.

12. Terminal client selon la revendication 10, **caractérisé en ce qu'**il comporte un module (50) configuré pour assurer la gestion de l'interface de réseau d'accès, le système de gestion de la mise en veille étant intégré dans ledit module.

13. Terminal client selon la revendication 10, **caractérisé en ce qu'**il comporte un module (50), configuré pour assurer la gestion de l'interface de réseau d'accès, comportant une broche spécifiquement dédiée à la mise en veille, le système de gestion de la mise en veille étant configuré pour agir sur ladite broche.

14. Terminal client selon la revendication 10, **caractérisé en ce que** le système de gestion de la mise en veille est configuré pour commander séparément une alimentation d'émission MAC et une alimentation de réception MAC.

## Patentansprüche

1. Verfahren zur Datenverarbeitung für die Verwaltung der Versetzung eines Client-Endgerätes (23, 24, 25, 26, 27, 28, 30, 31, 32), das mit einem Betreiber-Endgerät (21, 22, 35) eines Zugangsnetzes verbunden ist, in den Bereitschaftszustand, wobei das Verfahren die folgenden Schritte umfasst, die von dem Client-Endgerät durchgeführt werden:
a) Bestimmen (S4, S4a, S4b, S5, S5a, S6) einer Politik der Versetzung des Client-Endgerätes in den Bereitschaftszustand in Abhängigkeit von einem Typ des Client-Endgerätes, einer vordefinierten Konfiguration des Client-Endgerätes und/oder Diensten, die für das Client-Endgerät konfiguriert sind,
b) Überwachen (S7, S8, S9, S10, S10a) einer Client-Schnittstelle des Client-Endgerätes, die zwischen dem Client-Endgerät und einem dem Client-Endgerät nachgeordneten Teil eines lokalen Netzes angeordnet ist, um einen Verkehrszustand auf der Client-Schnittstelle zu bestimmen und in Abhängigkeit von dem Verkehrszustand und der Politik der Versetzung in den Bereitschaftszustand eine Versetzung der Client-Schnittstelle in den Bereitschaftszustand zu bewirken; danach, wenn sich die Client-Schnittstelle im Bereitschaftszustand befindet,
c) Überwachen (S11, S12, S13, S14, S14a) einer Zugangsnetz-Schnittstelle des Client-Endgerätes, die zwischen dem Client-Endgerät und dem Betreiber-Endgerät angeordnet ist, um einen Verkehrszustand auf der Zugangsnetz-Schnittstelle zu bestimmen und in Abhängigkeit von dem Verkehrszustand und der Politik der Versetzung in den Bereitschaftszustand eine Anforderung zur Versetzung der Zugangsnetz-Schnittstelle in den Bereitschaftszustand an das Betreiber-Endgerät zu senden.

2. Verfahren nach Anspruch 1, **dadurch gekennzeichnet, dass** das Client-Endgerät (23, 24, 25, 26, 27, 28, 30, 31, 32) vom Typ eines individuellen Endgerätes oder vom Typ eines gemeinsam genutzten Endgerätes ist.

3. Verfahren nach Anspruch 1, **dadurch gekennzeichnet, dass** Schritt a) einen Arbeitsgang (S6) der Erkennung des Vorhandenseins eines hochverfügbaren Dienstes unter den für das Client-Endgerät konfigurierten Diensten umfasst.

4. Verfahren nach Anspruch 1, **dadurch gekennzeichnet, dass** es einen Schritt (S13) der Prüfung einer Bedingung der Unterbrechung des Bereitschaftszustands, welcher ausgeführt wird, wenn sich die Client-Schnittstelle und die Zugangsnetz-Schnittstelle im Bereitschaftszustand befinden, und einen Schritt des Bewirkens des Verlassens des Bereitschaftszustands durch die Client-Schnittstelle und die Zugangsnetz-Schnittstelle, welcher ausgeführt wird, wenn die Bedingung des Prüfungsschrittes erfüllt ist, umfasst.

5. Verfahren nach Anspruch 1, **dadurch gekennzeichnet, dass** es die folgenden Schritte umfasst, die von dem Betreiber-Endgerät (21, 22, 35) durchgeführt werden:
d) Bestimmen (S103, S104, S105, S105a, S106, S106a) einer Politik der Versetzung des Client-Endgerätes (23, 24, 25, 26, 27, 28, 30, 31, 32) in den Bereitschaftszustand in Abhängigkeit von einem Typ des Client-Endgerätes, einer vordefinierten Konfiguration des Client-Endgerätes und/oder Diensten, die für das Client-Endgerät konfiguriert sind, und Ableiten daraus, ob das Client-Endgerät für eine Versetzung in den Bereitschaftszustand in Frage kommt, und wenn das Client-Endgerät für eine Versetzung in den Bereitschaftszustand in Frage kommt,
e) Bestimmen (S108) eines Verkehrszustands auf der Zugangsnetz-Schnittstelle und, in Abhängigkeit von dem Verkehrszustand, Bewirken der Versetzung der Zugangsnetz-Schnittstelle in den Bereitschaftszustand.

6. Verfahren nach Anspruch 1, **dadurch gekennzeichnet, dass** das Zugangsnetz ein passives optisches Netz ist, wobei das Betreiber-Endgerät ein optisches Leitungsendgerät ist und das Client-Endgerät ein optisches Netzendgerät ist.

7. Verfahren nach Anspruch 1, **dadurch gekennzeichnet, dass** es in dem Betreiber-Endgerät einen Schritt (S115) der Verwaltung der Versetzung des Betreiber-Endgerätes in den Bereitschaftszustand umfasst.

8. Verfahren nach Anspruch 7, **dadurch gekennzeichnet, dass** der Schritt der Verwaltung der Versetzung des Betreiber-Endgerätes (21, 22, 35) in den Bereitschaftszustand Arbeitsgänge der Bestimmung einer Anzahl von Client-Endgeräten (23, 24, 25, 26, 27, 28, 30, 31, 32), die mit dem Betreiber-Endgerät verbunden sind, der Bestimmung (S114) eines Bereitschaftszustands jedes der Benutzer-Endgeräte und des Bewirkens (S115), wenn alle Client-Endgeräte als im Bereitschaftszustand befindlich bestimmt wurden, der Versetzung einer Dienstnetz-Schnittstelle des Betreiber-Endgerätes, die zwischen dem Zugangsnetz und einem dem Zugangsnetz vorgelagerten Netz angeordnet ist, in den Bereitschaftszustand umfasst.

9. Computerprogramm, welches Anweisungen zur Durchführung des Verfahrens nach einem der Ansprüche 1 bis 8, wenn dieses Programm von einem Prozessor ausgeführt wird, umfasst.

10. Client-Endgerät (23, 24, 25, 26, 27, 28, 30, 31, 32), welches geeignet ist, mit einem Betreiber-Endgerät (21, 22, 35) eines Zugangsnetzes verbunden zu werden, ein System zur Verwaltung (51, 52, 53, 54, 55, 56, 57) der Versetzung in den Bereitschaftszustand umfassend, das dafür ausgelegt ist:
o eine Politik der Versetzung des Client-Endgerätes in den Bereitschaftszustand in Abhängigkeit von einem Typ des Client-Endgerätes, einer vordefinierten Konfiguration des Client-Endgerätes und/oder Diensten, die für das Client-Endgerät konfiguriert sind, zu bestimmen,
o eine Client-Schnittstelle des Client-Endgerätes zu überwachen, die zwischen dem Client-Endgerät und einem dem Client-Endgerät nachgeordneten Teil eines lokalen Netzes angeordnet ist, um einen Verkehrszustand auf der Client-Schnittstelle zu bestimmen und in Abhängigkeit von dem Verkehrszustand und der Politik der Versetzung in den Bereitschaftszustand eine Versetzung der Client-Schnittstelle in den Bereitschaftszustand zu bewirken; danach, wenn sich die Client-Schnittstelle im Bereitschaftszustand befindet,
o eine Zugangsnetz-Schnittstelle des Client-Endgerätes zu überwachen, die zwischen dem Client-Endgerät und dem Betreiber-Endgerät angeordnet ist, um einen Verkehrszustand auf der Zugangsnetz-Schnittstelle zu bestimmen und in Abhängigkeit von dem Verkehrszustand und der Politik der Versetzung in den Bereitschaftszustand eine Anforderung zur Versetzung der Zugangsnetz-Schnittstelle in den Bereitschaftszustand an das Betreiber-Endgerät zu senden.

11. Client-Endgerät nach Anspruch 10, **dadurch gekennzeichnet, dass** es ein Modul (50) aufweist, das dafür ausgelegt ist, die Verwaltung der Zugangsnetz-Schnittstelle sicherzustellen, wobei das System zur Verwaltung der Versetzung in den Bereitschaftszustand dafür ausgelegt ist, auf Stromversorgungsstifte des Moduls einzuwirken.

12. Client-Endgerät nach Anspruch 10, **dadurch gekennzeichnet, dass** es ein Modul (50) aufweist, das dafür ausgelegt ist, die Verwaltung der Zugangsnetz-Schnittstelle sicherzustellen, wobei das System zur Verwaltung der Versetzung in den Bereitschaftszustand in das Modul integriert ist.

13. Client-Endgerät nach Anspruch 10, **dadurch gekennzeichnet, dass** es ein Modul (50) aufweist, das dafür ausgelegt ist, die Verwaltung der Zugangsnetz-Schnittstelle sicherzustellen, und einen Stift aufweist, der speziell für die Versetzung in den Bereitschaftszustand bestimmt ist, wobei das System zur Verwaltung der Versetzung in den Bereitschaftszustand dafür ausgelegt ist, auf den Stift einzuwirken.

14. Client-Endgerät nach Anspruch 10, **dadurch gekennzeichnet, dass** das System zur Verwaltung der Versetzung in den Bereitschaftszustand dafür ausgelegt ist, eine MAC-Sende-Stromversorgung und eine MAC-Empfangs-Stromversorgung separat zu steuern.

## Claims

1. Data processing method for managing the putting into standby of a client terminal (23, 24, 25, 26, 27, 28, 30, 31, 32) connected to an operator terminal (21, 22, 35) of an access network, the method including the following steps implemented by said client terminal:
a) determining (S4, S4a, S4b, S5, S5a, S6) a policy for putting the client terminal into standby depending on a type of said client terminal, on a predefined configuration of said client terminal and/or on services configured for said client terminal,
b) monitoring (S7, S8, S9, S10, S10a) a client interface of said client terminal, which interface is positioned between said client terminal and a portion of a local area network situated downstream of said client terminal, in order to determine a state of traffic on said client interface, and, depending on the state of traffic and on said policy for putting into standby, commanding said client interface to be put into standby, and then, when the client interface is in standby,
c) monitoring (S11, S12, S13, S14, S14a) an access network interface of said client terminal, which interface is positioned between said client terminal and said operator terminal, in order to determine a state of traffic on said access network interface, and, depending on the state of traffic and on said policy for putting into standby, transmitting a request, to said operator terminal, to put said access network interface into standby.

2. Method according to Claim 1, **characterized in that** said client terminal (23, 24, 25, 26, 27, 28, 30, 31, 32) is of individual terminal type or of collective terminal type.

3. Method according to Claim 1, **characterized in that** step a) includes an operation (S6) of detecting the presence of a high-availability service from among the services configured for said client terminal.

4. Method according to Claim 1, **characterized in that** it includes a step (S13) of testing for a standby interruption condition, which step is executed when the client interface and the access network interface are in standby, and a step of commanding an exit from standby of the client interface and of the access network interface, which step is executed when the condition of the test step is verified.

5. Method according to Claim 1, **characterized in that** it includes the following steps implemented by the operator terminal (21, 22, 35):
d) determining (S103, S104, S105, S105a, S106, S106a) a policy for putting the client terminal (23, 24, 25, 26, 27, 28, 30, 31, 32) into standby depending on a type of said client terminal, on a predefined configuration of said client terminal and/or on services configured for said client terminal, and deducing therefrom whether the client terminal is eligible to be put into standby, and, when the client terminal is eligible to be put into standby,
e) determining (S108) a state of traffic on said access network interface, and, depending on the state of traffic, commanding the putting into standby of said access network interface.

6. Method according to Claim 1, **characterized in that** the access network is a passive optical network, the operator terminal being an optical line terminal, the client terminal being an optical network terminal.

7. Method according to Claim 1, **characterized in that** it includes, in said operator terminal, a step (S115) of managing the putting into standby of said operator terminal.

8. Method according to Claim 7, **characterized in that** the step of managing the putting into standby of said operator terminal (21, 22, 35) comprises operations of determining a number of client terminals (23, 24, 25, 26, 27, 28, 30, 31, 32) connected to said operator terminal, of determining (S114) a standby state of each of said user terminals, and of commanding (S115), when all of the client terminals have been determined as being in standby, the putting into standby of a service network interface of said operator terminal, said interface being positioned between the access network and a network situated upstream of the access network.

9. Computer program including instructions for implementing the method according to any one of Claims 1 to 8 when this program is executed by a processor.

10. Client terminal (23, 24, 25, 26, 27, 28, 30, 31, 32) able to be connected to an operator terminal (21, 22, 35) of an access network, including a putting into standby management system (51, 52, 53, 54, 55, 56, 57) configured to:
o determine a policy for putting the client terminal into standby depending on a type of said client terminal, on a predefined configuration of said client terminal and/or on services configured for said client terminal,
o monitor a client interface of said client terminal, which interface is positioned between said client terminal and a portion of a local area network situated downstream of said client terminal, in order to determine a state of traffic on said client interface, and, depending on the state of traffic and on said policy for putting into standby, command said client interface to be put into standby, and then, when the client interface is in standby,
o monitor an access network interface of said client terminal, which interface is positioned between said client terminal and said operator terminal, in order to determine a state of traffic on said access network interface, and, depending on the state of traffic and on said policy for putting into standby, transmit a request, to said operator terminal, to put said access network interface into standby.

11. Client terminal according to Claim 10, **characterized in that** it includes a module (50) configured to provide the management of the access network interface, the putting into standby management system being configured to act on power supply pins of the module.

12. Client terminal according to Claim 10, **characterized in that** it includes a module (50) configured to provide the management of the access network interface, the putting into standby management system being integrated into said module.

13. Client terminal according to Claim 10, **characterized in that** it includes a module (50), configured to provide the management of the access network interface, including a pin specifically dedicated to the putting into standby, the putting into standby management system being configured to act on said pin.

14. Client terminal according to Claim 10, **characterized in that** the putting into standby management system is configured to separately command a MAC transmission power supply and a MAC reception power supply.
